# EUROPÄISCHE PATENTSCHRIFT

(11) **EP 0 706 751 B1**
(45) Veröffentlichungstag und Bekanntmachung des Hinweises auf die Patenterteilung: **08.12.1999**
(21) Anmeldenummer: 95113740.5
(22) Anmeldetag: 01.09.1995
(51) Int. Cl.: A01D 80/00, A01D 78/12

(54) **Kreiselschwader**
Rotary type swather
Andaineur rotatoire

(30) Priorität: 12.10.1994 DE 4436388
(43) Veröffentlichungstag der Anmeldung: 17.04.1996
(73) Patentinhaber: CLAAS SAULGAU GMBH, D-88340 Saulgau (DE)
(72) Erfinder: Geng, Manfred, D-88348 Saulgau-Bogenweiler (DE)

(56) Entgegenhaltungen:
- DE-A- 4 103 507
- DE-A- 4 206 504

## Beschreibung

Die Erfindung bezieht sich auf einen Kreiselschwader nach dem Gattungsbegriff des Anspruches 1. Die Aufgabenstellung entspricht im wesentlichen derjenigen der deutschen Offenlegungsschrift 4103507. Es wird jetzt aber eine Lösung vorgelegt, die einfacher und kostengünstiger als die zuvor genannte ist und dazu noch eine weitere Schwadfunktion bietet.

Erfindungsgemäß sind zur Erzielung der verschiedenen Schwadablagen die Laufräder des Fahrgestells um senkrechte Achsen schwenkbar und feststellbar am fahrgestell angeordnet.

Weitere erfindungswichtige Einzelheiten werden in den Ansprüchen 3 und 4 offenbart.

Die Erfindung wird anhand von vier Abbildungen beispielsweise erläutert.
- Figur 1: zeigt einen Kreiselschwader mit drei Schwadkreiseln in Arbeitsstellung in einer schematischen Ansicht von oben.
- Figur 2: zeigt den gleichen Gegenstand mit zwei vorderen Schwadkreiseln in Arbeitsstellung und dem hinteren Schwadkreisel in Ruhestellung.
- Figur 3: zeigt den gleichen Gegenstand mit einem vorderen und dem hinteren Schwadkreisel in Arbeitsstellung und einem vorderen Schwadkreisel in Ruhestellung.
- Figur 4: zeigt die gleiche Stellung der Schwadkreisel, aber bei schräg gestellten Laufrädern des Fahrgestelles.

Ein Fahrgestell (1) wird im wesentlichen von einem Radträger (2), einer Zugdeichsel (3) und zwei Laufrädern (4) gebildet. An Konsolen (5, 6, 7), die fest mit dem Fahrgestell (1) verbunden sind, sind Tragarme (8, 9, 10) um horizontale Achsen (11, 12, 13) hochklappbar angelenkt. Die Achsen (11, 12) liegen parallel zur Zugdeichsel (3), die Achse (13) schräg dazu. An den Tragarmen (8, 9, 10) sind Schwadkreisel (14, 15, 16) um Achsen (17, 18, 19) schwenkbar gelagert. Die Schwadkreisel (14, 15, 16) stützen sich in der Arbeitsstellung über ein Fahrwerk mit Nachlaufrädern (20) auf den Erdboden ab. Die Laufräder (4) sind an dem Radträger (2) um senkrechte Achsen (21) schwenkbar und feststellbar gelagert. Durch nicht dargestellte Mittel, z. B. hydraulische Hubzylinder, können die Schwadkreisel (14, 15, 16) in eine Arbeitsstellung oder eine Ruhestellung gebracht werden. Während sie in der Arbeitsstellung durch nicht dargestellte Getriebe im Sinne der Pfeile A bzw. B angetrieben werden, ist der Antrieb in der Ruhestellung stets abgeschaltet.

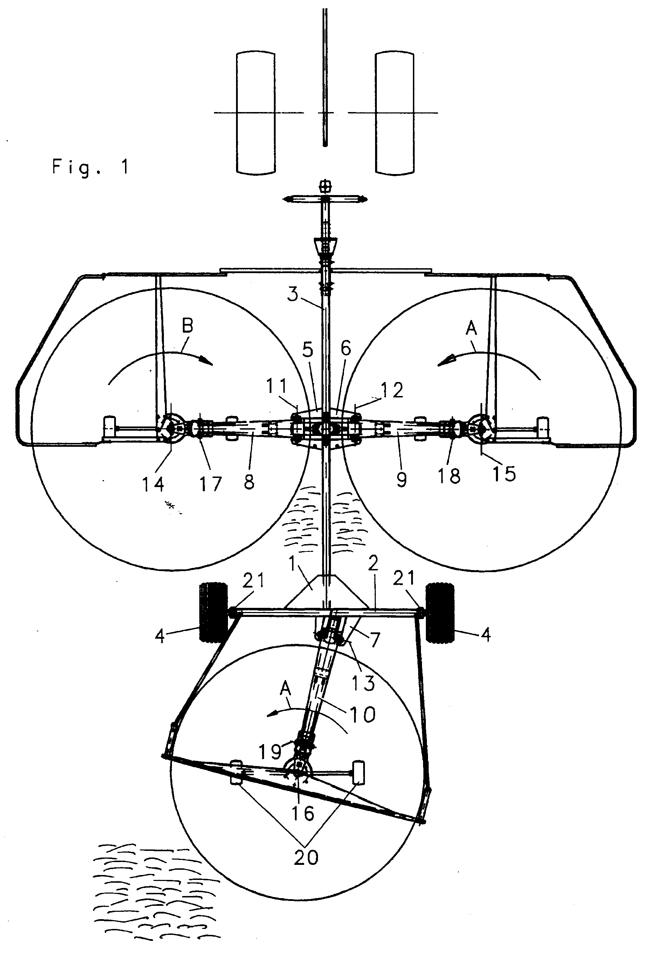

In der Arbeitsstellung nach Figur 1 stellen die Schwadkreisel (14, 15) gemeinsam einen Großschwad her. Dieser wird von dem nachlaufenden Schwadkreisel (16) nach der linken Seite versetzt und dort abgelegt. Dabei wird das Erntegut, das zunächst in dem Zwischenraum zwischen den Arbeitskreiseln (14, 15) auf dem Boden liegengeblieben ist ebenfalls aufgenommen und zur Seite versetzt.

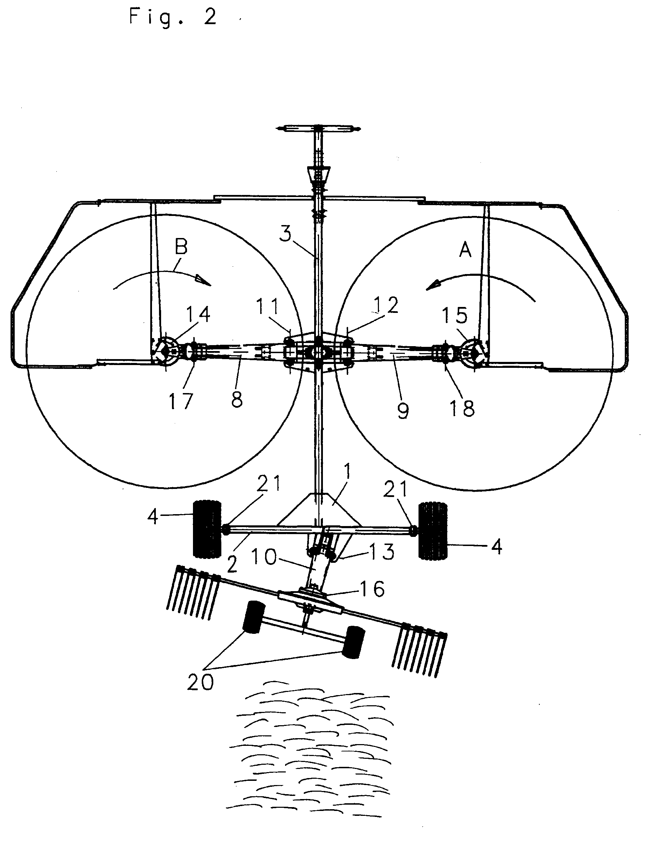

In der Arbeitsstellung nach Figur 2 befindet sich der Schwadkreisel (16) in Ruhestellung. Der erzeugte Großschwad wird mittig abgelegt.

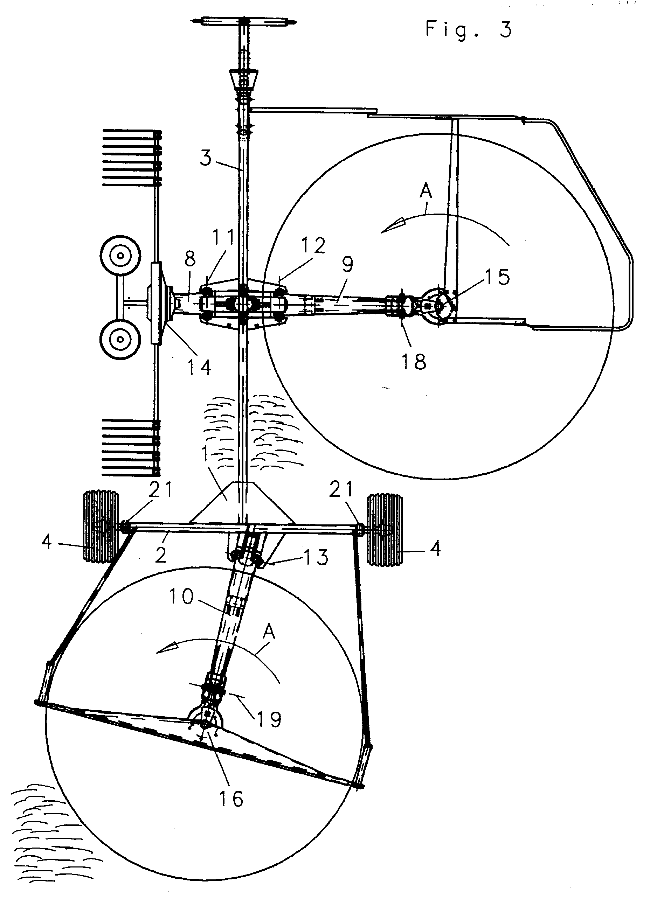

In der Arbeitsstellung nach Figur 3 wird der von den Schwadkreiseln (15, 16) erzeugte Schwad seitlich abgelegt.

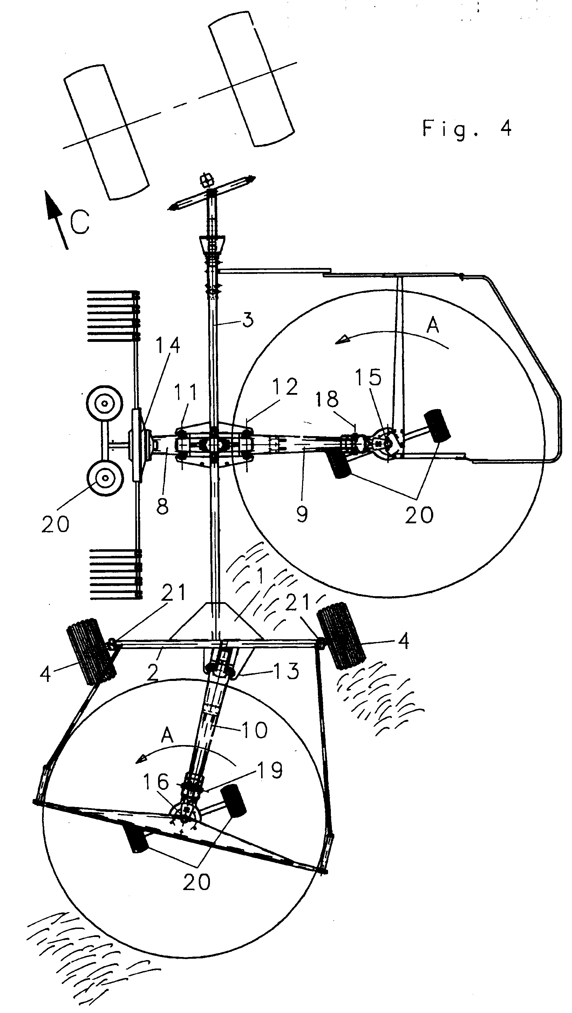

In der Arbeitsstellung nach Figur 4 bestimmen die schräggestellten Laufräder (4) die Fortbewegungsrichtung des Kreiselschwaders in Richtung des Pfeiles C. Der von dem Schwadkreisel (15) erzeugte Kleinschwad läuft in der Lücke zwischen dem Schwadkreisel (15) und dem Schwadkreisel (16) ab, während der von dem Schwadkreisel (16) erzeugte Kleinschwad seitlich links von diesem abläuft.

Zur Erzielung einer günstigen Transportstellung werden alle drei Schwadkreisel in eine Ruhestellung hochgeklappt.

## Patentansprüche

1. Kreiselschwader mit drei Schwadkreiseln (14, 15, 16) zur Erzeugung eines mittig oder seitlich abgelegten Großschwades oder von zwei Kleinschwaden mit einem mindestens zwei Laufräder (4) aufweisenden Fahrgestell (1),
dadurch gekennzeichnet,
daß zur Erzielung der verschiedenen Schwadgrößen und Schwadablagen die Laufräder (4) des Fahrgestells (1) um senkrechte Achsen (21) schwenk- und feststellbar am Fahrgestell (2) angeordnet sind.

2. Kreiselschwader nach Anspruch 1, dadurch gekennzeichnet, daß die Schwadkreisel (14, 15, 16) um horizontale Achsen (11, 12, 13) an dem Fahrgestell (1) hochklappbar gelagert sind und alle in einem unveränderlichen Drehsinn antreibbar sind.

3. Kreiselschwader nach den Ansprüchen 1 und 2, dadurch gekennzeichnet, daß - in Fahrtrichtung gesehen - zwei Schwadkreisel (14, 15) vor den Laufrädern (4) des Fahrgestelles (1) und ein Schwadkreisel (16) dahinter angeordnet sind.

4. Kreiselschwader nach den Ansprüchen 1 bis 3, dadurch gekennzeichnet, daß der Antrieb der Schwadkreisel (14, 15, 16) in einer hochgeklappten Stellung manuell oder zwangläufig abschaltbar ist.

## Claims

1. A rotary windrower with three windrowing rotors (14, 15, 16) for producing a centrally or laterally deposited large windrow or two small windrows with a chassis (1) having at least two support wheels (4) characterised in that to produce the various windrow sizes and windrow deposits the support wheels (4) of the chassis (1) are arranged on the chassis (1) pivotably and fixably about perpendicular axes (21).

2. A rotary windrower according to claim 1 characterised in that the windrowing rotors (14, 15, 16) are mounted on the chassis (1) pivotably upwardly about horizontal axes (11, 12, 13) and all are drivable in an invariable direction of rotation.

3. A rotary windrower according to claims 1 and 2 characterised in that - viewed in the direction of travel - two windrowing rotors (14, 15) are arranged in front of the support wheels (4) of the chassis (1) and one windrowing rotor (16) is arranged therebehind.

4. A rotary windrower according to claims 1 to 3 characterised in that the drive of the windrowing rotors (14, 15, 16) can be manually or necessarily switched off in an upwardly pivoted position.

## Revendications

1. Andaineur giratoire comprenant trois toupies (14, 15, 16) pour produire un andain de grande largeur déposé en position médiane ou latérale ou deux andains de faible largeur, avec un châssis (1) comprenant au moins deux roues de roulement (4), caractérisé par le fait qu'en vue de l'obtention des différentes largeurs d'andains et différents modes de dépose d'andains, les roues de roulement (4) du châssis (4) sont montées sur le châssis (1) de manière à pouvoir être orientées par pivotement autour d'axes verticaux (21) et être bloquées en position sur le châssis.

2. Andaineur giratoire suivant la revendication 1, caractérisé par le fait que les toupies (14, 15, 16) sont montées de manière à pouvoir être relevées par pivotement autour d'axes horizontaux (11, 12, 13) sur le châssis (1) et sont tous entraînés en sens de rotation inchangé.

3. Andaineur giratoire suivant les revendications 1 et 2, caractérisé par le fait que dans le sens d'avancement de l'andaineur, deux toupies (14, 15) sont disposées devant les roues de roulement (4) du châssis (1) et une toupie (16) est disposée derrière.

4. Andaineur giratoire suivant les revendications 1 à 3, caractérisé par le fait que l'entraînement des toupies (14, 15, 16) peut être coupé manuellement ou est coupé automatiquement en position relevée.
